# EUROPEAN PATENT SPECIFICATION

(11) **EP 0 646 294 B1**
(45) Date of publication and mention of the grant of the patent: **06.11.1996**
(21) Application number: 93913229.6
(22) Date of filing: 28.05.1993
(51) Int. Cl.: H02G 15/00, H01B 17/26

(54) **CABLE SEALING AND/OR FEEDTHROUGH DEVICE**
KABEL-VERSCHLUSS UND/ODER -DURCHFÜHRUNG/-DURCHLASS
DISPOSITIF POUR L'OBTURATION ET/OU LE PASSAGE DE CABLES

(30) Priority: 15.06.1992 GB 9212625
(43) Date of publication of application: 05.04.1995
(73) Proprietor: N.V. RAYCHEM S.A., 3010 Kessel-Lo (BE)
(72) Inventor: PIECK, Amandus, Lucien, Emiel, B-3382 Kortenaken (BE); VAN HEES, Jan, B-3010 Kessel-LO (BE)
(74) Representative: Benson, John Everett
(86) International application number: GB9301121
(87) International publication number: WO9326069

(56) References cited:
- EP-A- 0 110 673
- EP-A- 0 124 987
- EP-A- 0 251 396
- GB-A- 2 087 170
- US-A- 4 602 840
- US-A- 5 091 987

## Description

The present invention relates to an article for forming a cable seal, in particular for forming a ready access butt closure or an in-line closure for a telecommunications or other cable splice. It may however be used for forming a cable feedthrough.

Cable splices have to be sealed against the environment to prevent damage to the cable conductors and connectors joining them. When a cable splice is made, cable jacket is stripped back from the ends of the cables to be spliced to expose the conductors to be connected. After the splice is made a so-called splice case, or splice closure, is built up around the splice.

In certain instances it is desirable for the splice to be of butt, rather than in-line configuration. This means that two or more cables lying side-by-side with their ends pointing in the same direction are spliced together. An advantage is that a housing comprising a domed cover can be slid over the resulting splice. A single seal then has to be made where the cables leave an outlet of the housing. In the case of an in-line splice (made between ends of cables that face one another) two seals need to be made. one at each end of a generally cylindrical housing that surrounds the splice. Also, the housing of a butt closure need not be of the wrap-around type and can still be removed.

Various cable splice closures have been proposed in the past, a few of which will be reviewed below.

US 4194082 (Campbell) disclosed a generally dome-shaped closure having a heat-shrinkable end that is shrunk down around an ingoing cable. As a result of heat-shrinkage, a seal is made around the cable, isolating the inside of the closure from the environment.

WO 90/05401 (Raychem) discloses an in-line splice closure that can avoid the use of heat-shrinkable materials. A sealing material, for example a gel, is provided as part of end seals that seal gaps between in-going and out-going cables of a splice case, a central part of which comprises a generally cylindrical housing. The end seals comprise the gel between structures that can be brought together to deform the gel to seal it to the cables and the central housing.

US 4701574 (Shimirak et al) also discloses a closure which includes a cable end seal and a central generally cylindrical housing. The end seals have an outer convoluted surface that mates with a convoluted surface of the cylindrical housing. In this way the end seals are retained in appropriate positions at the ends of the housing.

US 3984623 (Worden) discloses a cable splice housing having a hollow, tubular, plastics body, an end of which carries a plug, the opposite end being blind. A clamp is provided around the hollow body for clamping the body around the plug. The housing is filled with grease.

US 2771502 (J H King et al) discloses a splice closure comprising an elongate housing, each end of which has clamping means for gripping therein outwardly-turned tabs of the jackets of the cables being spliced. This provides axial pull-strength across the splice; load is carried by the housing rather than by connectors and conductors of the cable. A resilient compressible bushing seals each end of the closure and is connected to the gripping means by a bolt.

US 2688651 (J Blake) discloses a cable joint protector comprising a tubular enclosing sleeve for positioning over a cable joint with the cables extending out of each end of the sleeve. The sleeve having at each end a sealing arrangement comprising an external thread on the sleeve. and an end cap having an internal thread such that the cap can be screwed onto an end of the sleeve. A resilient plug having a hole for the cable. is slid along each cable into the end of the sleeve. The cap is then screwed onto the sleeve causing the plug to be deformed into sealing engagement with the cable and the inside of the sleeve.

This disclosure of each of the above-mentioned patent specifications is incorporated herein by reference.

Whilst satisfactory seals can be made using the techniques described above, each has its drawbacks. Many of them are complex and expensive and take time to carry out.

We have now discovered that an improved cable seal can be made if excess internal and excess external pressure can each be arranged to reinforce the seal.

Thus, in one embodiment the invention provides a cable sealing device, which comprises:
(a) a housing into which the cable passes;
(b) a seal that seals a gap between the housing and the cable. which seal comprises a sealing material between first and second means for axially locating the sealing material;
the housing having a cavity within which the seal can slide axially inwardly and outwardly respectively to excess external and excess internal pressure, and having first and second stop means which can engage respectively the first and second means for locating thereby restricting the axial sliding.

The device may comprise an in-line splice closure, in which the housing has a seal (b) adjacent each end thereof, but we prefer that it comprise a butt splice closure, in which the housing has a seal (b) adjacent one end thereof and is blind at an opposite end thereof.

The housing preferably comprises a base and a cover therefor, the base receiving the seal (b). The cover is preferably substantially dome shaped. The two part may be held together by a circular or other clamp, optionally together with an O-ring or other sealing means positioned between two abutting surfaces of the two parts.

Although the device will be useful for sealing a single cable, for example as a feedthrough where the cable passes through a wall or bulkhead, in general we prefer that it be used to seal a plurality of cables. In general, the seal (b) will be provided with respective holes for each cable.

Preferably the first and second means for locating can be brought towards one another to cause axial compression of the sealing material. This axial compression results in radial expansion that seals any gap between the cables and/or between the cables and the housing. The means for locating may be brought together by means of a nut and bolt, one of which preferably bears on an end of a compression spring, the other of which bears on one of the means for locating. In this way the sealing material is maintained under compression by the resilience of the spring.

The sealing material preferably comprises a gel or other material having a cone penetration (measured by a modified version of ASTM D217) within the range 30-400 (10⁻¹mm), and/or an ultimate elongation (measured by ASTM D412) greater than 100%, with substantially elastic deformation to an elongation of at least 100%. Generally such materials comprise an oil or other liquid-extended polymer composition. the composition preferably contains a three dimensional cross-linked molecular structure. Such structures may be formed from block copolymers having relatively hard blocks and relatively elastomeric blocks, examples of such copolymers including styrene-diene block copolymers (for example styrene isoprene or styrene-butadiene block copolymers) or styrene-ethylene butylene-styrene triblock copolymers. Examples of triblock copolymers include those supplied by Shell under the trademark Kraton. These block copolymers are extended by oils. The resulting gels will in general be thermoplastic, as is preferred for ease of manufacture of the product. In one embodiment a gel is used comprising 10-14% by weight of the copolymer Kraton G1651, 84-88% of a mineral oil and minor amounts of a stabilizer etc. Other gels can be used if desired, for example those based on polyurethanes or silicones. Harder gels may be made by reducing the oil content, for example by using 78-82% oil and if desired a mixture of block copolymers such as Kraton G1651 and Kraton G1650 preferably about 10% of each.

In order to aid positioning of the housing around the sealing material, the sealing material may be extended axially with respect to the cable thereby contracting it transversely. In any case the sealing material is preferably positioned around the cable (or cables) and the housing then slid along the cable and over the sealing material. Alternatively, the cable may remain fixed with respect to the housing and the sealing material slid with respect to both of them. The sealing material preferably comprises a generally cylindrical plug having an axial hole therethrough for each cable. Such holes preferably communicate with the outer circumference of the plug by a slit through the sealing material. In this way the plug can be "wrapped-around" the cable, obviating the need for access to a free end of the cable.

The invention is further illustrated with reference to the accompanying drawings, in which:
Figure 1 shows a butt splice closure;
Figure 2 shows a seal for use within the housing of a splice closure showing the possibility for axial sliding;
Figure 3 shows the effect of excess internal and external pressure;
Figure 4 shows a disassembled splice closure; and
Figure 5 shows the closure of figure 4 after assembly.

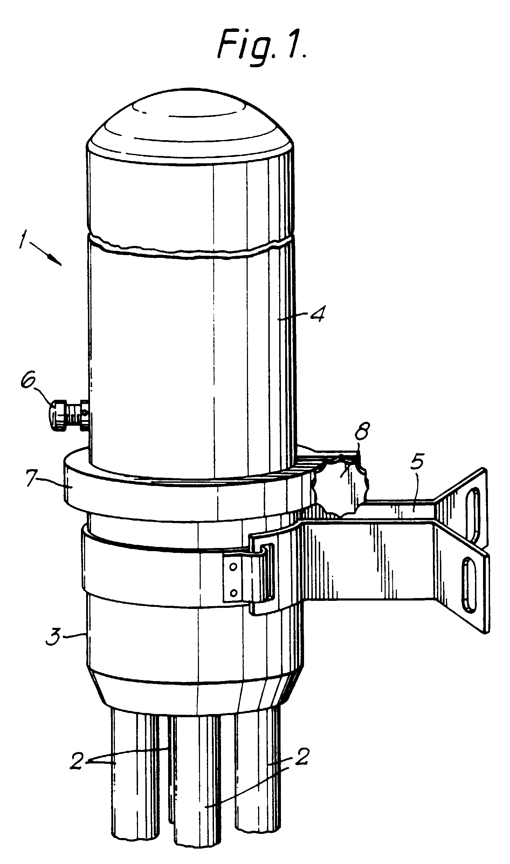

Figure 1 shows a butt splice closure 1 sealing a splice between cables 2. The closure 1 comprises a base 3 through which the cables 2 pass and a dome-shaped cover 4 that mates with the base 3 and within which the cable splice itself is concealed. The closure may be attached by means of a bracket 5 to a pole or wall etc.

Some other preferred features are shown. The closure may be provided with a valve 6 by means of which the closure can be pressurized or pressure tested. That may be desirable when the closure seals a splice between pressurized cables. The base and the domed cover may be secured together by means of a circular clamp 7, the ends of which are forced together by a bolt or other means 8. The clamp may force base and cover together about an O-ring positioned between them.

The sealing material (b) and means (c) referred to above may be provided, for example, within the base 3.

Such a closure is illustrated with four cables but the invention may be used to seal any reasonable number of cables. The cables may be electrical or optical cables.

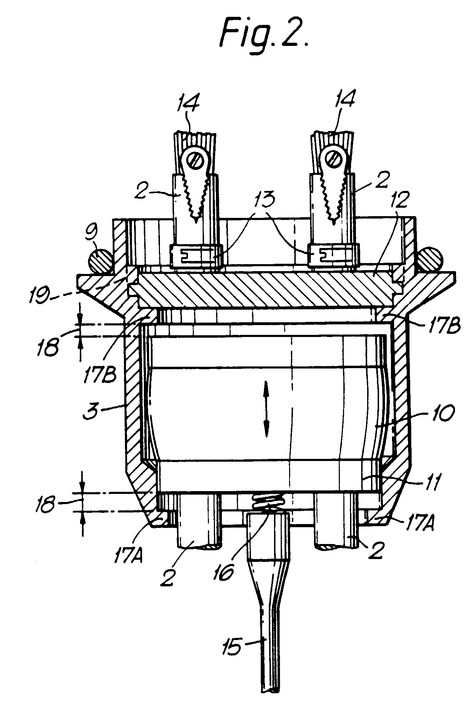

A base is illustrated in cross-section and in more detail in figure 2.

The base is shown separated from a cover, and an O-ring 9 is shown on which a cover would sit. The O-ring can be seen to rest on a bevelled flange, which together with a similar bevelled flange on the cover provides the means whereby a radially tightened clamp 7 (figure 1) forces the base and cover together.

The cables 2 pass into the closure through holes in the base, and their jackets are removed from the portions within the closure in order to allow their conductors 14 to be connected together.

The closure needs to be sealed against the environment to prevent damage by moisture etc. to the conductors 14. This requires sealing of any gap between the cables and the walls of the base, or other part of the overall housing of the closure. In the embodiment illustrated, such a gap is sealed by means of a sealing material 10 located between two plates 11 or other means allowing the sealing material to be compressed longitudinally.

Such longitudinal compression (which in figure 2 has not yet been effected) causes the sealing material to be displaced radially outwards to form the desired seal.

The plates 11 can be brought together for this purpose by means of a device 15 that is or contains a nut that on rotation moves along a bolt (hidden in the figures) thus forcing spring 16 against the lower of the two plates 11. The bolt is attached to the upper plate 11, and tightening of the nut therefore brings the plates together. causing the desired deformation of the sealing material 10.

The lower plate 11 can be retained within the base 3 by means such as an inwardly turned rim or lip 17A and the upper plate 11 by a rim or lip 17B. These rims or lips 17A and 17B are the first and second stop means of the invention. The lower and/or upper part of the base 3 may be provided with a waist along which the plate 11 can slide over a distance 18 and still be retained against lateral movement. Thus the sealing material plus plates can slide a certain amount in each axial direction. In this way excess pressure within and outside the closure can add to axial pressure on the sealing material and reinforce the seal.

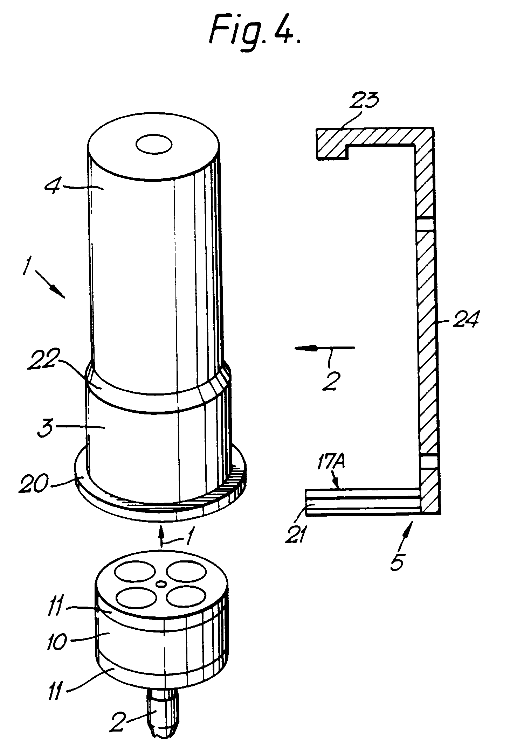

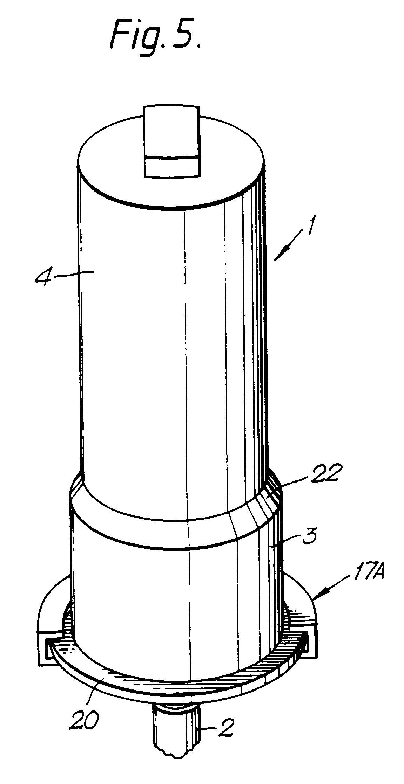

If rim or lip 17A is an integral part of the base, or is permanently fixed to the base it will in general be necessary for the sealing material 10 and plates 11 to be inserted into the base 3 from above as drawn. Similarly, if rim or lip 17B is integral or permanently fixed, it will in general be necessary to insert material 10 and plates 11 from below as drawn. An alternative design allows the sealing material and plates to be inserted from either end. A split C-ring, or other retaining means, can be attached to the bottom or top of the base to retain the corresponding plate 11. Such means may be locked in place by buttons or other locking means on a circumference of the base, which may involve for example a snap fit or sliding plus rotation. Other ways of retaining one or both of the stop means include bayonet fixings, springs, push-through stops screw fitments or the pole clamp of figures 4 and 5.

Figure 2 illustrates a transverse member 12 which can preferably be slid into the housing and locked (for example by rotation thereof) against axial movement with respect to the housing. I prefer that the transverse member be separate from the upper plate 11, and that the upper plate be able to move axially with respect to the transverse member 12. The upper rim or lip 17B may be secured in a similar way to the transverse member 12.

The function of the transverse member 12 is to provide mechanical connection between the cables 2 and the closure, preferably the base 3 thereof. The possibility of movement between the upper plate 11 and the transfer member 12 allows the sealing and mechanical functions to be decoupled. In this way an optimum seal can be formed that is not impaired by axial pull on, or bending of, the cables.

The transverse member 12 is preferably a plate or flange that (together with the cables 2) covers substantially the entire cross-section of the base. It may, however, comprise elongate rods or other members and have the form of a frame.

The cables 2 are anchored to the transverse member by means of clamps 13, which may have the form of hose clamps or jubilee clips etc. I prefer that such clamps can be secured to the cables, and subsequently secured to the transverse member 12. If the clamps are permanently, or at least first, attached to the member 12, assembly is likely to be more difficult.

As the sealing material is compressed to form the desired seal, some radial movement of the cables is likely to be desirable if uniform pressure of sealing material is to be obtained around all cables. Sealing of different sizes of cables will make such movement more desirable. This movement is preferably allowed for in the invention by the way in which the clamps 13 are secured to the transverse member 12. Some form of relative sliding motion is preferably allowed for.

For example the transverse member may have substantially radially-extending slots within which the clamps can slide. Each pair of slots and clamps will in general have an interengaging protrusion and recess to prevent or to restrict relative axial movement. One or both of each protrusion and recess will extend in a radial direction in order that the interengagement be maintained over the desired relative radial movement. I prefer that the walls of the recess have rails which mate with slots in the clamps, but the situation may be reversed.

The radially-extending slots preferably extend to the circumference of the transverse member so that the clamps can be inserted into the slots after the cables have been secured in the clamps.

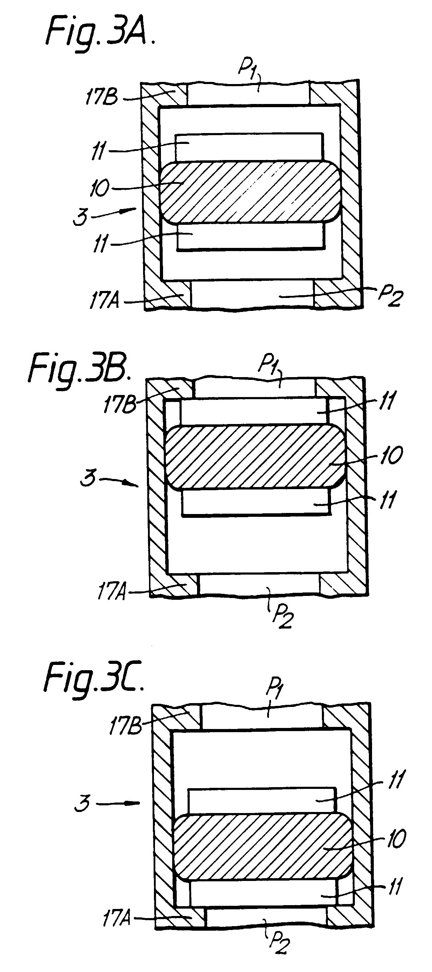

Figures 3A, 3B and 3C show the effect of respectively equal internal and external pressures, excess external pressure and excess internal pressure. Each of these situations could arise in a cable splice case, in particular in one susceptible to temperature variations.

These figures show a part of the base 3 of figure 2. A seal comprising a sealing material between two plates 11 is positioned within a base 3 between upper and lower stop means 17B and 17A.

Some means such as the bolt 15 and spring 16 of figure 2 has been used to bring plates 11 together, thereby axially compressing and radially extending the sealing material 10. A seal can be seen to have been made to the walls of the base 3. (The cables are omitted for clarity.)

In Figure 3A the pressure within the splice closure (P₁) equals ambient pressure (P₂), so the sealing pressure on the sealing material simply equals the bias pressure provided by the plates 11.

Figure 3B shows the situation where ambient pressure (P₂) exceeds the pressure within the splice closure. Since the seal is free to move between the stop means 17B, 17A it can respond to the excess pressure and deform, thereby reducing the extent to which its seal to the base is in peel (the figures are merely schematic and show only butt movement of the seal). The seal can move until it abuts the stop means 17B. As a result the sealing pressure is the sum of the bias pressure due to the plates and (P₂ - P₁).

The situation of Figure 3C is analogous. Here excess internal pressure moves the seal onto stop means 17A. The sealing pressure is now equal to the sum of the bias pressure due to the plates and (P₁ -P₂).

Figures 4 and 5 show a technique by means of which stop means 17A can be provided.

A housing comprises a dome cover 4 and base 3 are shown as integral parts, but they may be separable. A seal comprising a sealing material 10 between plates 11 is inserted into the bottom of the housing, in the direction of the arrow 1. Then, bracket 5 is slid in the direction of arrow 2 such that a flange or other means 20 engages a recess 21 or other means 21 on the bracket 5. A part 17A of the bracket then provides one of the stop means for the seal. The other stop means can be provided by a shoulder 22 or insert of the base 3 or cover 4. A top of the bracket can snap over or otherwise engage a part of the cover 4 to hold it in place.

An external bracket 5 can have the sole function of providing a stop means ( particularly the stop means 17A), or it may have one or more other functions. For example it may hold together base 3 and cover 4, or it may be used to secure the closure 1 to a wall or pole etc, for example by means of an axial part 24 thereof.

Figure 5 shows the closure of figure 4 when assembled.

## Claims

1. A cable sealing device (1), which comprises:
(a) a housing (3, 4) into which the cable (2) passes;
(b) a seal that seals a gap between the housing and the cable, which seal comprises a sealing material (10) between first and second means (11) for axially locating the sealing material;
characterised by the housing (3, 4) having a cavity within which the seal can slide axially inwardly and outwardly with respect to the housing in response respectively to excess external and excess internal pressure, and having first and second stop means (17A, 17B) which can engage respectively the first and second means (11) for locating thereby restricting the axial sliding.

2. A device (1) according to claim 1, comprising an in-line cable splice closure, the housing having a seal (b) adjacent one end thereof.

3. A device (1) according to claim 1, comprising a butt splice closure, the housing (3, 4) having a seal (b) adjacent one end thereof and being blind at an opposite end thereof.

4. A device (1) according to claim 3, in which the housing (3, 4) comprises a base (3) and a cover (4) therefor, the base receiving the seal (b).

5. A device (1) according to any preceding claim, being a device for sealing a plurality of cables (2), the seal having therethrough respective holes for each cable.

6. A device (1) according to any preceding claim, in which the first and second means (11) for locating can be brought towards one another to cause axial compression of the sealing material (10).

7. A device (1) according to any preceding claim, in which the sealing material (10) comprises a gel.

8. A device (1) according to any preceding claim, in which the sealing material (10) has a cone penetration, measured in accordance with ASTM D217, from 30-400 (10⁻¹mm) and/or an ultimate elongation, measured in accordance with ASTM D412 greater than 100%.

9. A device (1) according to any preceding claim, in which the sealing material (10) has a passage therethrough for the cable (2), the passage extending to an outer surface of the material, allowing the material to be wrapped around the cable.

## Patentansprüche

1. Kabelabdichtvorrichtung (1), die folgendes aufweist:
(a) ein Gehäuse (3, 4), in das das Kabel (2) geführt ist;
(b) eine Dichtung, die einen Zwischenraum zwischen dem Gehäuse und dem Kabel abdichtet und die ein Dichtmaterial (10) zwischen einer ersten und einer zweiten Einrichtung (11) zum axialen Positionieren des Dichtmaterials aufweist;
dadurch gekennzeichnet,
daß das Gehäuse (3, 4) einen Hohlraum, in dem die Dichtung aufgrund von zu hohem äußeren Druck bzw. zu hohem inneren Druck in Axialrichtung nach innen und außen in bezug auf das Gehäuse gleiten kann, und erste und zweite Anschlagmittel (17A, 17B) aufweist, die jeweils mit der ersten bzw. der zweiten Einrichtung (11) zum Positionieren in Eingriff bringbar sind, um dadurch das axiale Gleiten zu begrenzen.

2. Vorrichtung (1) nach Anspruch 1,
die ein In-Line-Kabelspleißgehäuse aufweist, wobei das Gehäuse eine Dichtung (b) benachbart seinem einen Ende hat.

3. Vorrichtung (1) nach Anspruch 1,
die ein Stumpfspleißgehäuse aufweist, wobei das Gehäuse (3, 4) eine Dichtung (b) benachbart seinem einen Ende hat und an seinem entgegengesetzten Ende blind ist.

4. Vorrichtung (1) nach Anspruch 3,
wobei das Gehäuse (3, 4) eine Basis (3) und eine Abdekkung (4) dafür aufweist, wobei die Basis die Dichtung (b) aufnimmt.

5. Vorrichtung (1) nach einem der vorherigen Ansprüche,
die eine Vorrichtung zum Abdichten einer Vielzahl von Kabeln (2) ist, wobei die Dichtung entsprechende Durchgangslöcher für jedes Kabel hat.

6. Vorrichtung (1) nach einem der vorherigen Ansprüche,
wobei die erste und die zweite Einrichtung (11) zum Festlegen aufeinander zu gebracht werden können, um eine axiale Kompression des Dichtmaterials (10) zu bewirken.

7. Vorrichtung (1) nach einem der vorherigen Ansprüche,
wobei das Dichtmaterial (10) ein Gel aufweist.

8. Vorrichtung (1) nach einem der vorherigen Ansprüche,
wobei das Dichtmaterial (10) eine Konuspenetration, gemessen gemäß ASTM D217, von 30 bis 400 (10⁻¹ mm) und/oder eine Bruchdehnung, gemessen gemäß ASTM D412, von größer als 100 % hat.

9. Vorrichtung (1) nach einem der vorherigen Ansprüche,
wobei das Dichtmaterial (10) einen Durchgang für das Kabel (2) hat, wobei der Durchgang zu einer äußeren Oberfläche des Materials verläuft und es dem Material erlaubt, um das Kabel herumgewickelt zu werden.

## Revendications

1. Dispositif (1) de scellement de câble, qui comporte :
(a) un boîtier (3, 4) dans lequel le câble (2) passe ;
(b) un joint scellé qui scelle un espace entre le boîtier et le câble, lequel joint scellé comporte une matière de scellement (10) entre des premier et second moyens (11) destinés à positionner axialement la matière de scellement ;
caractérisé en ce que le boîtier (3, 4) présente une cavité à l'intérieur de laquelle le joint scellé peut glisser axialement vers l'intérieur et vers l'extérieur par rapport au boîtier en réponse à des pressions excédentaires extérieure et intérieure, respectivement, et comporte des premier et second moyens d'arrêt (17A, 17B) qui peuvent porter respectivement contre les premier et second moyens (11) de positionnement afin de limiter le glissement axial.

2. Dispositif selon la revendication 1, comportant une fermeture d'épissure de câble en ligne, le boîtier ayant un joint scellé (b) adjacent à l'une de ses extrémités.

3. Dispositif (1) selon la revendication 1, comportant une fermeture d'épissure en bout, le boîtier (3, 4) ayant un joint scellé (b) adjacent à l'une de ses extrémités et étant fermé à son extrémité opposée.

4. Dispositif (1) selon la revendication 3, dans lequel le boîtier (3, 4) comporte une base (3) et un capot (4) pour celle-ci, la base recevant le joint scellé (b).

5. Dispositif (1) selon l'une quelconque des revendications précédentes, ce dispositif étant destiné à sceller plusieurs câbles (2), le joint scellé étant traversé de trous respectifs pour chaque câble.

6. Dispositif (1) selon l'une quelconque des revendications précédentes, dans lequel les premier et second moyens (11) de positionnement peuvent être rapprochés l'un de l'autre pour provoquer une compression axiale d'une matière (10) de scellement.

7. Dispositif (1) selon l'une quelconque des revendications précédentes, dans lequel la matière de scellement (10) comprend un gel.

8. Dispositif (1) selon l'une quelconque des revendications précédentes, dans lequel la matière de scellement (10) présente une pénétration de cône, mesurée conformément à la norme ASTM D217, de 30-400 (10⁻¹ mm) et/ou un allongement à la rupture, mesuré conformément à la norme ASTM D412, supérieur à 100 %.

9. Dispositif (1) selon l'une quelconque des revendications précédentes, dans lequel la matière de scellement (10) est traversée par un passage pour le câble (2), le passage s'étendant jusqu'à une surface extérieure de la matière, permettant à la matière d'être enroulée autour du câble.
